# EUROPEAN PATENT SPECIFICATION

(11) **EP 0 725 153 B1**
(45) Date of publication and mention of the grant of the patent: **02.12.1998**
(21) Application number: 95924527.5
(22) Date of filing: 10.07.1995
(51) Int. Cl.: C22C 21/10

(54) **ALUMINUM ALLOY FOR DIE CASTING AND BALL JOINT USING THE SAME**
ALUMINIUMLEGIERUNG ZUM DRUCKGIESSEN UND DAMIT HERGESTELLTES KUGELGELENK
ALLIAGE D'ALUMINIUM POUR MOULAGE SOUS PRESSION ET ROTULE DE COUPLAGE L'UTILISANT

(30) Priority: 18.08.1994 JP 216525/94; 26.05.1995 JP 152186/95
(43) Date of publication of application: 07.08.1996
(73) Proprietor: NISSO METALLOCHEMICAL CO., LTD., Tokyo 101 (JP)
(72) Inventor: OHTAKE, Minoru, Aizu Plant Nisso Metallochem. Co., Fukushima 969-33 (JP); FUJIWARA, Yutaka Aizu Plant Nisso Metallochem.Co., Fukushima 969-33 (JP)
(74) Representative: Schmitz, Jean-Marie
(86) International application number: PCT/JP95/01367
(87) International publication number: WO 96/06197

(56) References cited:
- CH-A- 379 127
- DE-B- 1 160 195
- JP-A- 5 179 384
- JP-A-48 025 615
- JP-B-27 000 255

## Description

### Field of the Invention

As a material to be used for members to which mechanical strength be required, iron containing bush and die-casting zinc base alloys, particularly die-casting zinc base alloy composed of Zn, Al and Cu, for example BERIC (trademark), have been mainly used. When these alloys are used as the material for the parts to which mechanical strength is required, the alloys can provide excellent mechanical properties, such as tensile strength, hardness and toughness, to the parts, however, those alloys have disadvantages such as inferior corrosion resistance and greater specific gravity as much as 6.8 g/cm³.

### Background Art

Whereas, when die-casting aluminum base alloy is used, the mechanical strength of the die-casted product tends to be uneven in a great extent since the tensile strength of the die-casting aluminum base alloy is low as much as 20 to 30 Kgf/mm², particularly 10 to 20 Kgf/mm² at 0.2% proof stress, and therefore, it is not possible to expect to obtain the die-casted product with high quality. Furthermore, the toughness of the die-casting aluminum base alloy is inferior than the materials described above, thus the industrial use of the die-casting aluminum base alloy has been limited.

### Disclosure of the Invention

It is an object of the present invention to provide a die-casting aluminum base alloy, which has such properties as tensile strength, hardness and toughness similar to those of die-casting zinc base alloy, for example BERIC, and has further a specific gravity and corrosion resistance equivalent to those furnished to die-casting aluminum base alloys being currently used.

### (1) Constitution of the Invention

The present invention is directed to the use of a die-casting aluminum base alloy furnished with excellent mechanical strength and containing zinc in an amount of from 10 to 25% by weight, silica in an amount of from 6 to 10% by weight, copper in an amount of from 0.5 to 3.0% by weight, manganese in an amount of from 0.1 to 0.5% by weight, magnesium in an amount of from 0.02 to 0.5% by weight, iron in an amount of 1.3% or less by weight and aluminum and unavoidal impurity for the rest, for ball joints and stabilizer conrod for automobile.

### (2) Detailed Explanation of the Invention

The inventors of the present invention found novel alloys having excellent tensile strength, wear resistance and toughness, all of which could have not been given to die-casting aluminum base alloys in the past, by means of adding all of zinc, copper, magnesium, manganese and iron into an aluminum-silica base alloy.

Particularly, it has been known that tensile strength and wear resistance are the opposed properties to toughness, however, the aluminum base alloy according to the present invention can secure those properties in a good balance, and therefore, it is possible to use said aluminum base alloy for the material for sliding bearing parts, bearing parts, etc. In particular, the aluminum base alloy according to the present invention has excellent properties to be used for hall joints and a stabilizer conrod for automobile. By using the aluminum base alloy of the present invention, the use of aluminum base alloys as the material for parts whereto the die-casting aluminum base alloy currently used could have not been applied, is now becoming possible.

### a) Advantageous effect of metallic elements

### Zn: (10 - 25%)

Zinc is an element capable of effectively improving tensile strength, hardness, etc. of an alloy admixed therewith. However, such effects of zinc are tend to decrease when the content of zinc stay at less 10%, while wear resistance may deteriorate if the content of zinc exceeds 25%. When zinc coexists with silica, there is a tendency to form eutectic crystals consisted of Al, Si and Zn, thereby resulting in lowering of the melting point, which further making the castability better.

### Si: (6 - 10%)

Silica is an element capable of effectively improving the wear resistance and strength of a material admixed therewith, and it has also an effect of lowering a melting point of the material to thereby improve the castability of the material if it is admixed into the material. However, when the content of silica in the material is less than 6%, the wear resistance of the material deteriorates, while the toughness of the material deteriorates if the content of silica exceeds 10%.

### Cu: (0.5 - 3.0%)

Copper is an element which dissolves in the form of solid into initial phase crystals of a material and can effectively improve the strength and hardness of the material. However, when the content of copper in the material is less than 0.5%, said improving effect becomes low, while the toughness and the corrosion resistance of the material deteriorates if the content of copper in the material exceeds 3%.

### Mn : (0.1 - 0.5%)

Manganese is an element which can reform needle-shaped intermetallic compound containing iron to granular shape to thereby improve the toughness of a material admixed therewith. However, when the content of manganese in the material is less than 0.1%, such effect cannot be furnished, while the toughness of the material admixed decreases if the content of manganese in the material exceeds 0.5%, and which decrease further causing the elevation of melting point and the deterioration of the castability of the material.

### Mg: (0.02 - 0.5%)

Magnesium is an element of which trace amount can facilitate to dissolve a material admixed therewith in the form of solid during the initial phase of crystallization of a material and to form Mg₂Si to thereby result in precipitation hardening of the material, and it is extraordinary effective for improving the strength of the material. However, when the content of magnesium in the material is less than 0.02%, said effect cannot be furnished, while the material results in embrittlement if the content of magnesium in the material exceeds 0.5%.

### Fe: (1.3% or less)

Iron is an element which can effectively prevent the adhesion of a material to a foundry mold. However, when the content of iron in the material exceeds 1.3%, intermetallic compounds between any of Al, Si and Fe are produced, thereby deteriorating the toughness and corrosion resistance of the material.

It is confirmed that the alloys consisting of aluminum and unavoidal impurity and further containing the all elements described above each at a content in a ranges as described above, respectively, are excellent die-casting aluminum base alloys, which have solved the disadvantages of currently used die-casting aluminum base alloy and die-casting zinc base alloy.

### Brief Explanation of the Drawings

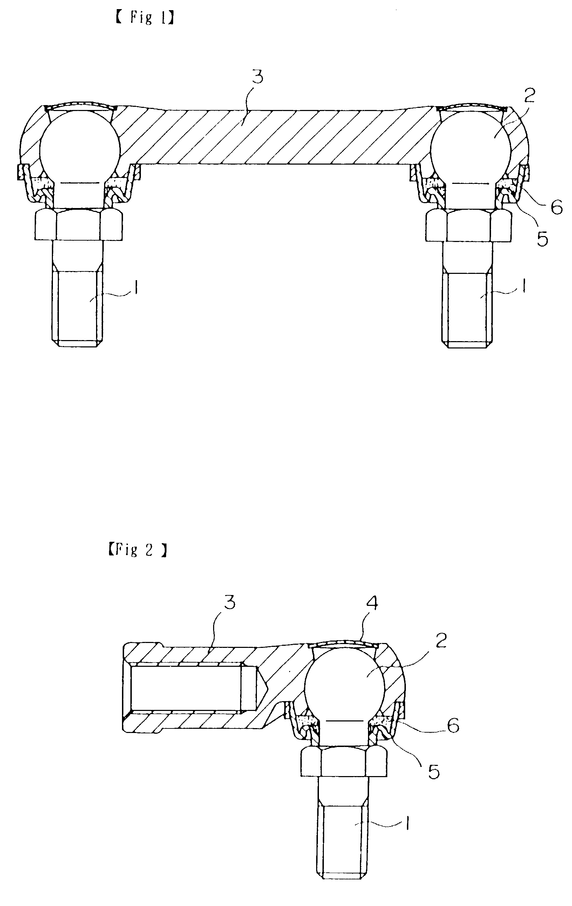

Figs. 1 and 2 illustrate the examples where the alloy according to the present invention is used, and each numbers in the figures represent the following parts.

1: Shaft, 2: Ball, 3: Holder, 4: Cap, 5: Boots, 6: Glees.

Fig. 1 is a sectional view of a stabilizer conrod for automobiles cut at a part thereof, wherein a pair of balls (2) respectively locating at the end of a shaft (1) are freely grasped by holders (3) casted with the alloy according to the present invention, respectively, and thus a ball joint is constituted.

Fig 2 is a sectional view of a ball joint cut at a part thereof, which is constituted in a typical ball joint. The ball joint has a structure wherein a holder (3) casted with the alloy according to the present invention is holding a ball (steel ball) (2).

### Best Mode for Carrying Out the Invention

Now, the present invention is described in detail with referring to the following examples.

### Example 1

Several aluminum base alloys each consisted of a chemical composition as shown in Table 1 were produced according to dissolution method being commonly used, then die-casting of the alloy was carried out at a casting temperature of 750 °C by using cold chamber type die-casting machine having a performance of 135 tons compressive force for casting. For the metallic mold used for the die-casting, a mold for producing both tensile test piece (diameter of the parallel part: 6.35 mm, gauge length: 50 mm, length: 230 mm) conforming to ASTM standard (B8-66) and impact test piece (distension: 6.35 x 6.35 x 230 mm) was employed. Mechanical tests were then carried out by using the test pieces described above. The hardness was also tested for the impact piece by polishing the piece with Emery papers (#1000) and then measured by using Vickers hardness test meter.

The alloys tested include the alloys No.1 through No.4 prepared according to the present invention, the comparative alloys No.5 through No.14, an alloy No.15 (die-casting zinc base alloy: BERIC) being currently used, and a die-casting aluminum base alloy No.16 (ADC 12). Each of the comparative alloys No.5 through No.14 has a chemical composition any of which components be out of the range of the corresponding components specified for the alloys of the present invention, respectively.

A variety of mechanical properties obtained for each alloys are shown in Table 2. As can be seen from the results shown in the Table 2, it is obviously understood that the alloys of the present invention show to have better mechanical properties than either properties of the comparative alloys or the alloy currently used.

### Example 2

Out of the alloys shown in Table 1, the alloys of the present invention No.1 through No.4, the comparative alloys No.6. No.10, No.12 and No.14, the alloy No.15 being currently used and the alloy No.16 are selected, and a casted piece of each alloy with a dimension of 30 mm (width) x 5 mm (thickness) x 150 mm (length) is prepared according to the casting condition as described above, respectively. Each casted piece was subjected to salt spray test (SST), and corrosion loss after 300 hours was measured for each casted pieces, respectively, to compare the corrosion resistance of the piece with each other.

The results are shown in Table 3.

According to the results on corrosion loss of the pieces obtained in said salt spray test, it is demonstrated that the alloys No.1 through No.4 show to have excellent corrosion resistance similar to that of die-casting aluminum base alloy No.16 being currently used. Whereas, corrosion resistance of the comparative alloys No.6 No.10, No.12, No.14 and the die-casting zinc base alloy No.15 being currently used were found to be remarkably inferior than that of the alloys of the present invention.

### Example 3

Out of the alloys shown in Table 1, the alloys of the present invention No.1 through No.3, the comparative alloys No.5 and No.7, the alloys being currently used No.15 and No.16 are selected, then friction amount was measured on each of the alloys by using the afore-mentioned casted piece mechanically worked to a dimension size of 10 mm (width) x 3 mm (thickness) x 36 mm (length) by Amsler friction test counter, respectively. The test was carried out by means of rolling friction method in the non-lubricating condition. As the opponent material, SKD 11 was employed, arid the friction amount was measured at the point where friction distance having reached to 3,000 meters.

The results are shown in Table 4.

As can be seen the results in Table 4, it is demonstrated that each of the alloys of the present invention is superior in wear resistance than both of the comparative alloys and the alloys currently used.

After considering all the results in Tables I through 4, it is proved that the alloys of the present invention have superior mechanical properties, particularly tensile strength, proof stress, hardness and toughness, than the properties of the alloys being currently used, while concurrently keeping the excellent corrosion resistance characteristic to aluminum base alloys.

**Table 1**

| | No. of Alloy | Chemical Composition (% by weight) | | | | | | | Remark |
|---|---|---|---|---|---|---|---|---|---|
| | | Zn | Si | Cu | Mg | Mn | Fe | Al | |
| Alloys of Present Invention | 1 | 12 | 9.0 | 2.0 | 0.3 | 0.3 | 0.5 | Rest | |
| | 2 | 15 | 8.0 | 1.0 | 0.3 | 0.3 | 0.5 | Rest | |
| | 3 | 20 | 7.5 | 1.0 | 0.05 | 0.5 | 0.5 | Rest | |
| | 4 | 23 | 6.5 | 0.5 | 0.2 | 0.5 | 0.5 | Rest | |
| Comparative Alloys | 5 | 5 | 8.0 | 1.0 | 0.3 | 0.3 | 0.5 | Rest | Zn |
| | 6 | 28 | 8.0 | 1.0 | 0.3 | 0.3 | 0.5 | Rest | Zn |
| | 7 | 15 | 2.0 | 1.0 | 0.3 | 0.3 | 0.5 | Rest | Si |
| | 8 | 15 | 12.5 | 1.0 | 0.3 | 0.3 | 0.5 | Rest | Si |
| | 9 | 15 | 8.0 | 0.1 | 0.3 | 0.3 | 0.1 | Rest | Cu |
| | 10 | 15 | 8.0 | 4.0 | 0.3 | 0.3 | 0.5 | Rest | Cu |
| | 11 | 20 | 7.0 | 1.0 | 0.008 | 0.3 | 0.5 | Rest | Mg |
| | 12 | 18 | 7.5 | 1.0 | 1.5 | 0.3 | 0.5 | Rest | Mg |
| | 13 | 20 | 7.0 | 1.5 | 0.2 | 1.1 | 0.5 | Rest | Mn |
| | 14 | 15 | 8.0 | 1.5 | 0.2 | 0.3 | 1.4 | Rest | Fe |
| Alloys being Currently Used | 15 | Rest | - | 3.5 | 0.04 | - | 0.01 | 3.5 | BERIC |
| | 16 | 0.3 | 11.5 | 2.0 | 0.1 | 0.2 | 0.8 | Rest | ADC12 |

**Table 2**

| | No. of Alloy | Tensile Strength Kg/mm² | Proof Stress Kg/mm² | Elongation % | Value of Impact Energy Kg • m/cm² | Hardness Hv |
|---|---|---|---|---|---|---|
| Alloys of Present Invention | 1 | 31 | 25 | 1.9 | 1.3 | 143 |
| | 2 | 34 | 27 | 1.8 | 1.3 | 152 |
| | 3 | 35 | 27 | 2.1 | 1.6 | 150 |
| | 4 | 36 | 26 | 1.5 | 1.5 | 150 |
| Comparative Alloys | 5 | 22 | 17 | 2.3 | 2.2 | 114 |
| | 6 | 28 | 21 | 0.7 | 0.6 | 131 |
| | 7 | 21 | 14 | 2.8 | 1.9 | 117 |
| | 8 | 27 | 16 | 0.5 | 0.5 | 133 |
| | 9 | 26 | 18 | 2.5 | 2.3 | 130 |
| | 10 | 31 | 27 | 0.5 | 0.5 | 145 |
| | 11 | 24 | 15 | 2.4 | 1.9 | 126 |
| | 12 | 35 | 27 | 0.5 | 0.4 | 155 |
| | 13 | 25 | 19 | 0.8 | 0.9 | 128 |
| | 14 | 24 | 19 | 0.8 | 0.7 | 124 |
| Alloys being Currently Used | 15 | 35 | 24 | 3.0 | 3.8 | 135 |
| | 16 | 24 | 16 | 1.8 | 1.5 | 115 |

**Table 3**

| (Corrosion Resistance) | | | |
|---|---|---|---|
| | No. of Alloy | SST Corrosion Loss g/m² | Evaluation |
| Alloys of Present Invention | 1 | 35 | Excellent |
| | 2 | 37 | Excellent |
| | 3 | 42 | Excellent |
| | 4 | 15 | Excellent |
| Comparative Alloys | 6 | 72 | Good |
| | 10 | 65 | Good |
| | 12 | 51 | Good |
| | 14 | 50 | Good |
| Alloys being Currently Used | 15 | 162 | Poor |
| | 16 | 33 | Excellent |

**Table 4**

| (Corrosion Resistance) | | | |
|---|---|---|---|
| | No. of Alloy | Friction Amount mm³ | Evaluation |
| Alloys of Present Invention | 1 | 28 | Excellent |
| | 2 | 25 | Excellent |
| | 3 | 22 | Excellent |
| Comparative Alloys | 5 | 43 | Poor |
| | 7 | 65 | Poor |
| Alloys being Currently Used | 15 | Unable to measure | Poor |
| | | due to seizure | |
| | 16 | 35 | Good |

### Industrial Utilization

The alloy of the present invention is provide with a specific gravity and corrosion resistance both of which are equivalent to those owned by die-casting aluminum base alloys being currently used, and it can be produced in a low cost and has excellent mechanical properties. Therefore, the alloy of the present invention can be used as a die-casting aluminum base alloy with suitable properties required for the material for sliding bearing parts, bearing parts, etc., particularly for ball joints.

## Claims

1. Use of a die-casting aluminum base alloy consisting of, by weight,
| | |
|---|---|
| Zn: 10 ∼ 25% | Si: 6 ∼ 10% |
| Cu: 0.5 ∼ 3.0% | Mn: 0.1 ∼ 0.5% |
| Mg: 0.02 ∼ 0.5% | Fe: less than 1.3% |
and the balance being Al and unavoidal impurities for the manufacture of a ball joint apparatus.

2. Use of a die-casting aluminum base alloy consisting of, by weight,
| | |
|---|---|
| Zn: 10 ∼ 25% | Si: 6 ∼ 10% |
| Cu: 0.5 ∼ 3.0% | Mn: 0.1 ∼ 0.5% |
| Mg: 0.02 ∼ 0.5% | Fe: less than 1.3% |
and the balance being Al and unavoidal impurities for the manufacture of a stabilizer conrod for automobile.

## Patentansprüche

1. Verwendung einer Spritzgießaluminiumbasislegierung bestehend aus bezogen auf das Gewicht:
| | |
|---|---|
| Zn: 10 ∼ 25% | Si: 6 ∼ 10% |
| Cu: 0,5 ∼ 3,0% | Mn: 0,1 ∼ 0,5% |
| Mg: 0,02 ∼ 0,5% | Fe: weniger als 1,3% |
und der Rest ist Al und unvermeidbare Verunreinigungen für die Herstellung einer Kugelgelenkvorrichtung.

2. Verwendung einer Spritzgießaluminiumbasislegierung bestehend aus bezogen auf das Gewicht:
| | |
|---|---|
| Zn: 10 ∼ 25% | Si: 6 ∼ 10% |
| Cu: 0,5 ∼ 3,0% | Mn: 0,1 ∼ 0,5% |
| Mg: 0,02 ∼ 0,5% | Fe: weniger als 1,3% |
und der Rest ist Al und unvermeidbare Verunreinigungen für die Herstellung einer Stabilisatorverbindungsstange fürs Automobil.

## Revendications

1. Utilisation d'un alliage à base d'aluminium moulé sous pression consistant en, en poids:
| | |
|---|---|
| Zn: 10 ∼ 25% | Si: 6 ∼ 10% |
| Cu: 0,5 ∼ 3,0% | Mn: 0,1 ∼ 0,5% |
| Mg: 0,02 ∼ 0,5% | Fe: moins que 1,3% |
et le complément étant de l'aluminium et des impuretés inévitables pour la fabrication d'un appareil à rotule de couplage.

2. Utilisation d'un alliage à base d'aluminium moulé sous pression consistant en, en poids:
| | |
|---|---|
| Zn: 10 ∼ 25% | Si: 6 ∼ 10% |
| Cu: 0,5 ∼ 3,0% | Mn: 0,1 ∼ 0,5% |
| Mg: 0,02 ∼ 0,5% | Fe: moins que 1,3% |
et le complément étant de l'aluminium et des impuretés inévitables pour la fabrication d'une barre de connexion de stabilisateur pour automobile.
